(19) Europäisches Patentamt
European Patent Office
Office européen des brevets

(11) **EP 2 202 524 B1**

(12) **FASCICULE DE BREVET EUROPEEN**

(45) Date de publication et mention
de la délivrance du brevet:
**18.05.2011 Bulletin 2011/20**

(51) Int Cl.:
***G01P 5/00*** *(2006.01)*     ***G01P 5/24*** *(2006.01)*
***G01P 13/02*** *(2006.01)*

(21) Numéro de dépôt: **09177645.0**

(22) Date de dépôt: **01.12.2009**

(54) **Sonde de mesure aerodynamique et helicoptere equipe de la sonde**

Aerodynamische Sonde und Helicopter mit der Probe

Aerodynamic probe and helicopter equipped with the probe

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **23.12.2008 FR 0807394**

(43) Date de publication de la demande:
**30.06.2010 Bulletin 2010/26**

(73) Titulaire: **Thales**
**92200 Neuilly Sur Seine (FR)**

(72) Inventeurs:
• **Choisnet, Joel**
**41100, NAVEIL (FR)**

• **Mandle, Jacques**
**41100, NAVEIL (FR)**

(74) Mandataire: **Collet, Alain et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**FR-A- 2 628 216    US-A- 4 143 548**
**US-A- 5 783 745**

## Description

L'invention concerne une sonde de mesure aérodynamique d'un flux d'air et un hélicoptère équipé de la sonde. L'invention permet notamment la détermination de la vitesse de l'incidence d'un flux d'air localement au voisinage de la sonde. L'invention trouve une utilité particulière dans le domaine aéronautique où la connaissance de la vitesse et de l'incidence d'un flux d'air entourant un aéronef est essentielle au pilotage de l'aéronef.

Il est connu de déterminer la vitesse V d'un aéronef à partir de mesures de pression de l'air entourant l'aéronef. Plus précisément, en mesurant la pression totale Pt, par exemple à l'aide d'un tube de Pitot, et la pression statique Ps de l'air on peut déterminer la vitesse V de l'aéronef par l'équation suivante :

$$ Pt - Ps = \rho \frac{V^2}{2} $$

où $\rho$ représente la densité de l'air.

A basse vitesse cette méthode de mesure donne des résultats peu fiables. En effet, le carré de la vitesse est proportionnel à la différence de pression Pt - Ps. En conséquence une petite erreur sur les mesures de pression entraîne une grande erreur sur la vitesse. Plus précisément en dérivant l'équation citée ci dessus, on obtient :

$$ d(Pt - Ps) = \rho.V.dV $$

ou encore

$$ dv = \frac{d(Pt - Ps)}{\rho.V} $$

Ceci montre qu'une erreur d(Pt - Ps) finie sur les mesures de pression entraîne une erreur dV infinie sur la détermination de la vitesse lorsque la vitesse est nulle, ou encore une grande erreur sur la détermination de la vitesse lorsque la vitesse est faible. Par exemple, à 10 noeuds de vitesse vraie, une erreur de 1 hpa sur les mesures de pression entraîne une erreur de 30 noeuds sur la détermination de la vitesse. Lorsque l'erreur est supérieure à la mesure, le résultat est inacceptable.

Des dispositifs de mesure optique ou Lidars peuvent également permettre de déterminer la vitesse et la direction du flux d'air par la détection de l'effet Doppler sur un signal de rétro-diffusion d'un faisceau lumineux émis par le dispositif de mesure dans un milieu que l'on souhaite analyser. L'effet Doppler consiste en un décalage de la fréquence d'une onde lumineuse renvoyée par un objet en mouvement. La distance entre le dispositif de mesure et l'objet, par exemple un ensemble de particules en mouvement, définit le type de détection du décalage Doppler qui peut être selon le cas de type cohérent ou encore de type direct ou incohérent. Ces dispositifs dépendent de la présence de particules dans le milieu dans lequel les mesures optiques sont réalisées et sont très difficiles à mettre au point.

Il est également possible de déterminer la vitesse d'un aéronef en étudiant l'effet de cette vitesse sur un système ayant un émetteur sonique ou ultrasonique envoyant une onde modulée vers deux récepteurs diamétralement opposés, comme par exemple dans le document US4143548.

Sur hélicoptère on a mis en oeuvre un moulinet tournant au dessus du rotor. Ce moulinet est fixé au sommet d'un tube solidaire de la boite de transmission principale de l'hélicoptère. Le moulinet, muni de tube de Venturi à chaque extrémité tourne à 720 tr/min environ au-dessus du moyeu rotor principal. La vitesse du flux d'air est déterminée par la position en amplitude et phase de la variation de pression entre chaque venturi par rapport à la position angulaire. Le système en question est très lourd au niveau installation sur hélicoptère et est peu utilisé. Il présente les mêmes défauts que le tube de Pitot aux basses vitesses.

Toujours sur hélicoptère, on a mis au point un concept d'anémométrie synthétique qui permet de donner une information de vitesse du flux d'air plus fiable aux basses vitesses. Ce concept repose sur le principe que la vitesse de l'air est proportionnelle à la différence entre le pas cyclique du rotor de sustentation de l'hélicoptère et l'assiette de l'hélicoptère. Ce principe permet de déterminer à la fois la direction et le module du vecteur vitesse de l'air. Cette méthode n'a été utilisée à ce jour que dans des centres d'essais en vol pour assurer la mise au point de nouveaux hélicoptères. Cette méthode n'a pas été utilisée lors de l'utilisation normale d'hélicoptères essentiellement à cause de son coût de mise en oeuvre important et à des difficultés d'étalonnage.

L'invention vise à pallier tout ou partie des problèmes cités plus haut en proposant une sonde de mesure aérodynamique de faible coût et permettant de réaliser des mesures fiables même aux basse vitesses.

A cet effet, l'invention a pour objet une sonde de mesure aérodynamique d'un flux d'air, caractérisée en ce qu'elle comprend un plateau tournant autour d'un axe, un émetteur pouvant émettre une onde

sonore, et un récepteur sensible à l'onde sonore, l'émetteur et le récepteur formant deux éléments solidaires du plateau et placés en des positions distinctes du plateau, la sonde comprenant en outre des moyens pour délivrer une information représentative d'une durée de parcours de l'onde sonore entre les deux éléments et une variation temporelle de l'information.

L'utilisation du plateau tournant rend la sonde particulièrement adaptée à une utilisation sur hélicoptère dans lequel le plateau tournant peut être fixé au centre du rotor de sustentation de l'hélicoptère. A cet endroit le flux d'air est peu perturbé les mouvements du rotor.

L'invention a également pour objet un hélicoptère caractérisé en ce qu'il comprend une sonde selon l'invention et des moyens d'affichage d'une vitesse du flux d'air déterminée au moyen de la sonde et d'une incidence locale du flux d'air déterminé au moyen de la sonde.

L'invention sera mieux comprise et d'autres avantages apparaîtront à la lecture de la description détaillée d'un mode de réalisation donné à titre d'exemple, description illustrée par le dessin joint dans lequel :

la figure 1 représente schématiquement un exemple d'implantation des différents moyens de l'invention dans un hélicoptère ;
la figure 2 représente un exemple de position d'un émetteur et d'un récepteur sonores utilisés dans l'invention ;
la figure 3 représente une variante de disposition des éléments formés par l'émetteur et le récepteur, dans laquelle on a redondé l'un des éléments ;
la figure 4 représente un exemple de courbe montrant l'évolution d'une information issue du récepteur sonore.

Par souci de clarté, les mêmes éléments porteront les mêmes repères dans les différentes figures.

L'invention est décrite en rapport avec l'utilisation d'une sonde équipant un hélicoptère. Il est bien entendu possible de mettre en oeuvre une telle sonde pour toute mesure aérodynamique d'un flux d'air, à bord d'un aéronef, en soufflerie...

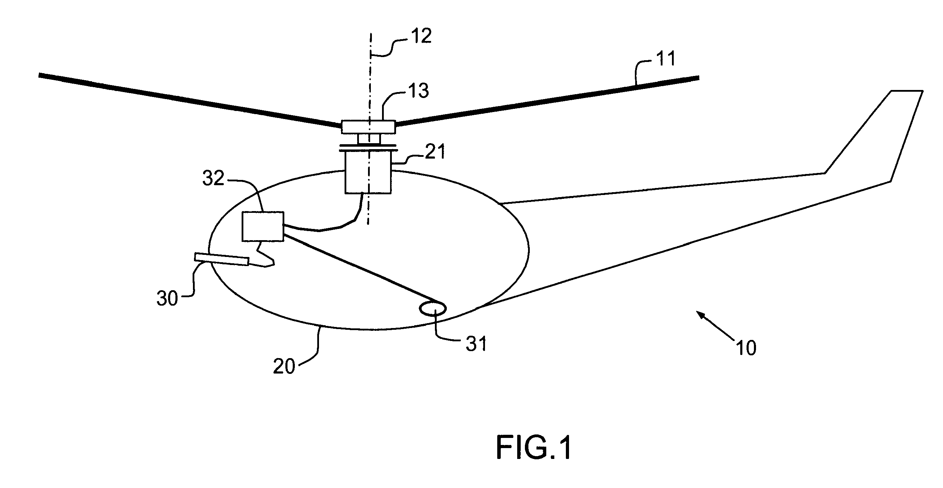

La figure 1 représente un hélicoptère 10 comportant un rotor 11 de sustentation tournant autour d'un axe 12. Au centre du rotor 11, on dispose un plateau 13 tournant avec le rotor 11.

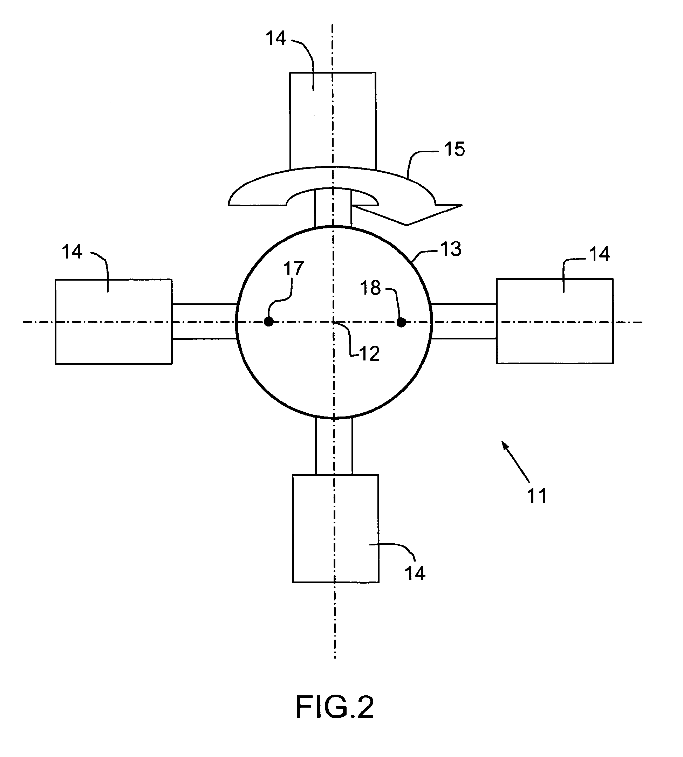

La figure 2 représente en vue de dessus le plateau tournant 13 ainsi que quatre pales 14 du rotor 11. Le plateau 13 est circulaire et son centre est situé sur l'axe 12. Le plateau 13 est solidaire du rotor 11 et tourne avec lui. La rotation du rotor autour de l'axe 12 est symbolisée par la flèche 15. Dans un hélicoptère, la vitesse de rotation du rotor est de l'ordre de quelques tours par secondes. Il est également possible de faire tourner le plateau 13 à une autre vitesse de rotation que celle du rotor 11, en l'entraînant par un moteur distinct d'une turbine entrainant généralement le rotor 11 ou encore en prévoyant un multiplicateur de vitesse à engrenages entre la turbine et le plateau 13. Un tel plateau 13 peut bien entendu être installé à un autre endroit que représenté sur la figure 1.

La sonde de mesure aérodynamique comprend un émetteur 17 pouvant émettre une onde sonore, et un récepteur 18 sensible à l'onde sonore issue de l'émetteur 17. On peut par exemple choisir d'émettre une onde ultrasonore dont la fréquence est de l'ordre de 40kHz. L'émetteur 17 et le récepteur 18 sont placés en des positions distinctes du plateau 13. Avantageusement, on cherche à placer l'émetteur 17 et le récepteur 18 le plus loin possible l'un de l'autre pour augmenter la distance les séparant. Il est donc possible de les disposer sur le plateau 13 de façon diamétralement opposée.

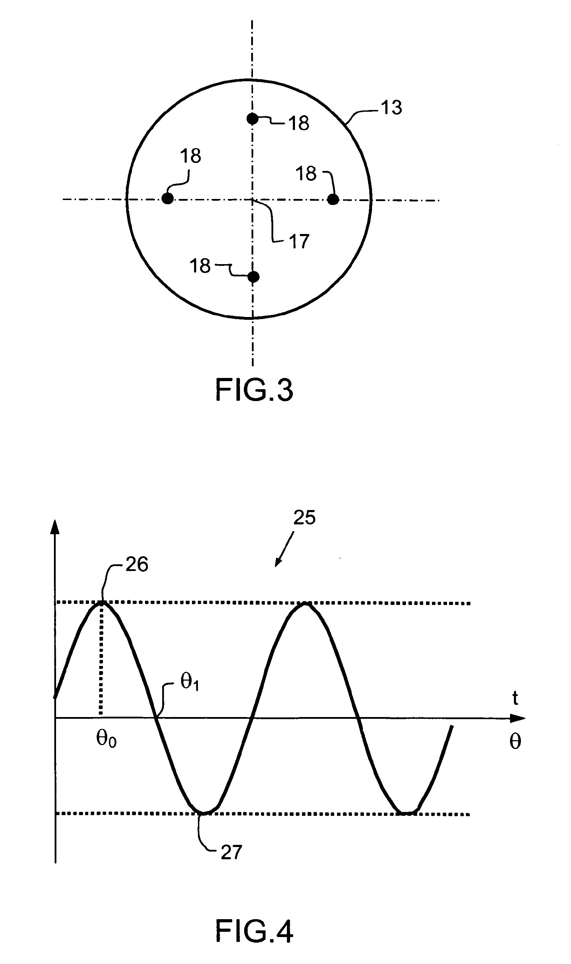

La figure 3 représente une variante de disposition des éléments formés par l'émetteur 17 et le récepteur 18, dans laquelle on a redondé l'un des éléments. Dans cette variante, un émetteur 17 est placé au centre du plateau 13 et plusieurs récepteurs 18, quatre dans l'exemple représenté, sont placés autour de l'émetteur 17. Les récepteurs 18 sont répartis angulairement autour de l'émetteur 17 et sont situés à égale distance de l'émetteur 17.

La sonde comprend des moyens pour générer un onde sonore émise par l'émetteur 17, des moyens pour capter par le ou les récepteurs 18 l'onde sonore émise par l'émetteur 17 et des moyens pour délivrer une information représentative d'une durée de parcours de l'onde sonore entre les deux éléments 17 et 18 et une variation temporelle de l'information. Ces différents moyens peuvent être placés à l'intérieur d'un corps 20 de l'hélicoptère 10 et raccordés au plateau 13 par l'intermédiaire d'un contacteur tournant 21. La redondance d'un des éléments comme représentée sur la figure 3 permet d'obtenir plusieurs informations distinctes. On peut détecter une panne de l'un des éléments 17 ou 18. On peut également moyenner l'information ou les paramètres aérodynamiques déterminés à partir de l'information, vitesse et incidence du flux d'air, pour améliorer la précision de la sonde.

Plusieurs possibilités peuvent convenir pour obtenir l'information représentative d'une durée de parcours de l'onde sonore entre l'émetteur 17 et chacun des récepteurs 18. Les récepteurs 18 peuvent être des microphones sensibles aux ondes émises par l'émetteur 17 ou résonnants, c'est-à-dire sensible à une fréquence particulière.

Les moyens pour délivrer une information représentative d'une durée de parcours de l'onde sonore peuvent détecter l'amplitude de l'onde sonore reçue. Même si le signal émis par l'émetteur 17 présente un front raide lors de son établissement, l'onde reçue par chacun des récepteurs 18 peut croitre plus lentement sans présenter de front d'établissement. Les moyens pour délivrer une information représentative d'une durée de parcours de l'onde sonore peuvent alors comprendre des moyens pour former un signal enveloppe du signal reçu et des moyens pour générer un signal binaire dont un front montant apparait lorsque le signal enveloppe dépasse un premier seuil et dont un front descendant apparait lorsque le signal enveloppe passe en dessous d'un second seuil, le premier seuil étant supérieur au second seuil. Les moyens pour générer le signal binaire peuvent comprendre un trigger de Schmitt.

A titre d'alternative, les moyens pour délivrer une information représentative d'une durée de parcours de l'onde sonore peuvent détecter un déphasage entre le signal émis et le signal reçu. Pour éviter le problème d'ambiguïté induit par des fréquences élevées, on peut moduler l'onde sonore émise autour d'une fréquence donnée. Un exemple d'une telle modulation est connu dans la littérature anglo-saxonne sous le nom de « Chirp » pour gazouillis. Il s'agit par exemple d'un signal sinusoïdal dont la fréquence varie linéairement dans le temps autour d'une fréquence centrale. Le dispositif comprend alors des moyens pour décoder une modulation en fréquence du signal reçu par le récepteur 18.

La figure 4 représente l'évolution dans le temps du signal recueilli par l'un des récepteurs 18. On considère que la vitesse et la direction du flux d'air n'évoluent pas lors de la rotation du plateau 13, au moins sur plusieurs tours de plateau 13. Le temps est représenté en abscisse et l'amplitude du signal en ordonnée. Il n'est pas nécessaire que le signal soit directement proportionnel au temps de parcours de l'onde sonore entre l'émetteur et le récepteur considéré. Il suffit que le signal représente le temps de parcours. Autrement dit, il suffit qu'il existe une bijection entre le signal et le temps de parcours.

Lorsque le plateau tourne à vitesse constante, ce qui est le cas pour le rotor d'un hélicoptère, l'abscisse de la figure 4 représente également la position angulaire $\theta$ d'un point du plateau 13 tournant autour de l'axe 12, en l'occurrence la position du récepteur 18 considéré. La sonde comprend des moyens de mesure d'une variation temporelle d'une position angulaire $\theta$ du plateau 13 autour de son axe 12. La position angulaire $\theta$ peut être récupérée directement au niveau du rotor 11 par exemple au moyen d'un codeur angulaire. La courbe représentant l'évolution du signal suit une sinusoïde 25 dont un maximum 26 et un minimum 27 sont obtenus lorsqu'un axe passant par l'émetteur 17 et par le récepteur 18 a la même orientation que celle du vecteur vitesse du flux d'air. Le récepteur 18 est en amont de l'émetteur 17 pour le maximum 26 et le récepteur 18 est en aval de l'émetteur 17 pour le minimum 27. L'amplitude de la sinusoïde 25 est directement corrélée au module du vecteur vitesse du flux d'air. En particulier, l'amplitude de la sinusoïde 25 est nulle, autrement dit, la courbe représentée en figure 4 est une droite horizontale, lorsque l'hélicoptère 10 effectue un vol stationnaire par rapport à l'air qui l'environne. De façon plus générale, la sonde comprend des moyens de détermination de la vitesse locale du flux d'air au voisinage du plateau 13 en fonction de la différence entre la valeur maximale 26 et la valeur minimale 27 de la variation temporelle de l'information.

La seule connaissance des valeurs du maximum 26 et du minimum 27 sans connaissance de la position angulaire du plateau 13 pour le minimum 26 et le maximum 27 permet déjà de déterminer le module du vecteur vitesse local du flux d'air. Cette détermination se fait sans être obligé d'aligner l'émetteur 17 et un des récepteurs 18 dans l'axe du flux d'air comme cela peut se faire pour une sonde statique.

La position angulaire $\theta_0$ du plateau 13 lors du maximum 26 ou du minimum 27 donne l'incidence locale du flux d'air par rapport au plateau 13. Il peut être plus aisé de déterminer une position angulaire $\theta_1$ du plateau 13 lorsque la valeur du signal est égale à la demi-amplitude de la sinusoïde 25. L'incidence locale est alors déphasée de 90° par rapport à cette position angulaire $\theta_1$.

Pour obtenir des valeurs de vitesse et d'incidence du flux d'air, on pourra être amené à réaliser un étalonnage de la sonde. Plus précisément, on établit la relation bijective entre la valeur de l'amplitude du signal et la vitesse du flux d'air pour la vitesse et on détermine un décalage éventuel de l'angle $\theta_0$ ou $\theta_1$ par rapport à l'incidence réelle du flux d'air.

On s'est rendu compte que la mesure expérimentale du temps de parcours entre un émetteur et un récepteur s'avère être plus grande que celle prévue par la théorie, à une valeur relativement constante près. En conséquence les méthodes de mesures des temps de parcours nécessitent des étalonnages des récepteurs, chacun ayant ses caractéristiques propres de temps de réponse, bande passante etc... Ces étalonnages des récepteurs sont fonction des conditions environnementales, température et pression en particulier.

Le déposant s'est aperçu que l'erreur de mesure de temps de parcours entre un émetteur et un récepteur était principalement due au récepteur et non à l'émetteur. En n'utilisant qu'un seul récepteur et plusieurs émetteurs, l'erreur sur la mesure reste constante et une seule calibration reste nécessaire. Dans le cas particulier de la variante de réalisation représentée à la figure 3, il est possible de placer un récepteur 18 au centre du plateau 13 et plusieurs émetteur 17 répartis autour du récepteur 18.

L'hélicoptère 1 peut également comporter des moyens 30 de prise de pression totale Pt, comprenant par exemple un tube de Pitot, et des moyens 31 de prise de pression statique Ps du flux d'air entourant l'hélicoptère 10. Les moyens de prise de pression 30 et 31 sont raccordés à un instrument 32 installé sur la planche de bord de l'hélicoptère 10. L'instrument 32 traite des informations de pression issus des moyens de prise de pression 30 et 31 pour déterminer à nouveau le module du vecteur vitesse du flux d'air entourant l'hélicoptère 10.

Le tube de Pitot est sensiblement orienté suivant un axe longitudinal de l'hélicoptère 10 pour déterminer la valeur de la vitesse suivant cet axe. L'axe longitudinal de l'hélicoptère 10 est compris dans le plan de la figure 1. Il serait bien entendu possible de placer un second tube de Pitot selon un axe transversal de l'hélicoptère 1, axe perpendiculaire au plan de la figure 1, afin de mesurer la seconde vitesse selon l'axe transversal. Néanmoins cette mesure ne présente que peu d'intérêt car la vitesse de l'hélicoptère dans un axe transversal est souvent faible.

Les valeurs des modules de vecteur vitesse du flux d'air déterminées par l'information représentative d'une durée de parcours de l'onde sonore et par les mesures de pression totale Pt et statique Ps pouvant être différentes, on appellera par la suite première vitesse Vs, la vitesse déterminée par l'information représentative d'une durée de parcours de l'onde sonore et seconde vitesse Vp, celle déterminée à partir des mesures de pression d'air.

L'instrument 32 comporte un calculateur permettant de déterminer la première vitesse Vs à l'aide des mesures de temps de parcours de l'onde sonore entre l'émetteur 17 et le ou les récepteurs 18.

Le calculateur détermine également la seconde vitesse en utilisant l'équation suivante :

$$Pt - Ps = \rho \frac{Vp^2}{2}$$

où $\rho$ représente la densité de l'air au niveau du sol.

L'instrument 32 peut également donner au pilote de l'hélicoptère 10 des informations concernant, l'altitude et l'assiette de l'hélicoptère 10.

L'instrument 32 peut comporter en outre des moyens de détermination d'une troisième vitesse Va à partir d'une pondération de la première vitesse Vs et de la seconde vitesse Vp. Avantageusement, les moyens de détermination de la troisième vitesse Va utilisent également le calculateur de l'instrument 32 déjà utilisé pour le calcul des première et seconde vitesses Vs et Vp et le cas échéant de l'altitude et de l'assiette de l'hélicoptère 10.

Avantageusement, la pondération ne se fait pas sur l'ensemble des vitesses que l'hélicoptère 10 peut atteindre. Aux basses vitesses, on privilégie la première vitesse Vs et aux hautes vitesses, on privilégie la seconde vitesse Vp. Plus précisément, la troisième vitesse Va est égale à la seconde vitesse Vp lorsque la seconde vitesse Vp est inférieure à une première valeur de vitesse V1. La troisième vitesse Va est égale à la première vitesse Vs lorsque la première vitesse Vs est supérieure à une seconde valeur de vitesse V2, V1 étant inférieur à V2. Ce n'est qu'entre les deux valeurs V1 et V2, que la pondération est effective. Par exemple, entre V1 et V2, on a :

$$Va = \alpha.Vs + (1 - \alpha).Vp$$

où $\alpha$ représente un coefficient de pondération variant entre 0 et 1. Pour éviter des sauts dans la valeur de Va, on donnera à $\alpha$ une valeur égale à 1 lorsque Vs = V1 et une valeur nulle lorsque Vp = V2. De V1 à V2 et on fera évoluer $\alpha$ de façon continue entre 1 et 0. On peut par exemple donner à V1 une valeur de 30 noeuds et à V2 une valeur de 50 noeuds. On rappelle qu'un noeud est égal à 0,51 m/s.

L'instrument 32 peut comprendre des moyens d'affichage de la vitesse Va du flux d'air et de son incidence locale au voisinage du plateau 13.

## Revendications

1. Sonde de mesure aérodynamique d'un flux d'air, **caractérisée en ce qu'**elle comprend un plateau (13) tournant autour d'un axe (12), un émetteur (17) pouvant émettre une onde sonore, et un récepteur (18) sensible à l'onde sonore, l'émetteur (17) et le récepteur (18) formant deux éléments solidaires du plateau (13) et placés en des positions distinctes du plateau (13), la sonde comprenant en outre des moyens pour délivrer une information (25) représentative d'une durée de parcours de l'onde sonore entre les deux éléments (17, 18) et une variation temporelle de l'information et **en ce qu'**elle comprend des moyens de détermination de la vitesse (Vs) locale du flux d'air au voisinage du plateau (13) en fonction de la différence entre une valeur maximale (26) et une valeur minimale (27) de la variation temporelle de l'information (25).

2. Sonde selon la revendication 1, **caractérisée en ce qu'**elle comprend des moyens de mesure d'une variation temporelle d'une position angulaire ($\theta$) du plateau (13) autour de son axe (12) et des moyens de détermination de l'incidence locale du flux d'air par rapport au plateau (13) en fonction de positions angulaires ($\theta_0$) du plateau (13) lors de valeurs maximale (26) et minimale (27) de la variation temporelle de l'information (25).

3. Sonde selon l'une des revendications précédentes, **caractérisée en ce qu'**elle comprend plusieurs seconds éléments (17, 18) répartis angulairement autour du premier élément (17, 18).

4. Sonde selon la revendication 3, **caractérisée en ce que** les seconds éléments (17, 18) sont situés à égale distance du premier élément (17, 18).

5. Sonde selon l'une des revendications précédentes, **caractérisée en ce que** le premier élément est un récepteur (18) et **en ce que** le second élément est un émetteur (17).

6. Sonde selon l'une des revendications précédentes, **caractérisée en ce qu'**elle équipe un hélicoptère (10) comprenant un rotor (11) basculant assurant la sustentation de l'hélicoptère (10) et **en ce que** le plateau tournant (13) est solidaire du rotor (11).

7. Sonde selon l'une des revendications précédentes, **caractérisée en ce qu'**elle comprend des prises de pression (30, 31) de l'air entourant l'hélicoptère (10), des moyens de détermination d'une seconde vitesse (Vp) du flux d'air entourant l'hélicoptère (10) à partir d'informations reçues des prises de pression (30, 31), des moyens de détermination d'une troisième vitesse (Va) du flux d'air à partir d'une pondération d'une première vitesse (Vs) du flux d'air issue de l'information représentative d'une durée de parcours de l'onde sonore et de la seconde vitesse (Vp).

8. Hélicoptère **caractérisé en ce qu'**il comprend une sonde selon l'une des revendications précédentes et des moyens d'affichage d'une vitesse (Vs, Vp, Va) du flux d'air déterminée au moyen de la sonde.

9. Hélicoptère selon la revendication 8, **caractérisé en ce qu'**il comprend des moyens d'affichage d'une incidence locale du flux d'air déterminé au moyen de la sonde.


**Claims**

1. A probe for aerodynamic measurement of an airflow, **characterised in that** it comprises a plate (13) rotating around an axis (12), an emitter (17) able to emit a sound wave, and a receiver (18) responsive to the sound wave, the emitter (17) and the receiver (18) forming two elements integral with the plate (13) and placed in distinct positions on the plate (13), the probe further comprising means for providing information (25) representing a duration for the course of the sound wave between the two elements (17, 18) and a time variation of the information, and **in that** it comprises means for determining the local speed (Vs) of the airflow in the vicinity of the plate (13) as a function of the difference between a maximum value (26) and a minimum value (27) of the time variation of the information (25).

2. The probe according to claim 1, **characterised in that** it comprises means for measuring a time variation of an angular position ($\theta$) of the plate (13) around its axis (12) and means for determining the local incidence of the airflow relative to the plate (13) as a function of angular positions ($\theta_0$) of the plate (13) at the maximum (26) and minimum (27) values of the time variation of the information (25).

3. The probe according to any one of the preceding claims, **characterised in that** it comprises several second elements (17, 18) angularly distributed around the first element (17, 18).

4. The probe according to claim 3, **characterised in that** the second elements (17, 18) are located equidistantly from the first element (17, 18).

5. The probe according to any one of the preceding claims, **characterised in that** the first element is a receiver (18) and **in that** the second element is an emitter (17).

6. The probe according to any one of the preceding claims, **characterised in that** it is fitted to a helicopter (10) comprising a tilt rotor (11) which provides the helicopter (10) with lift and **in that** the rotating plate (13) is integral with the rotor (11).

7. The probe according to any one of the preceding claims, **characterised in that** it comprises pressure sensors (30, 31) for the air around the helicopter (10), means for determining a second speed (Vp) of the airflow around the helicopter (10) from the information received from the pressure sensors (30, 31) and means for determining a third speed (Va) of the airflow from a weighting of a first speed (Vs) of the airflow originating from the information which represents a duration of the course of the sound wave and the second speed (Vp).

8. A helicopter, **characterised in that** it comprises a probe according to any one of the preceding claims and means for displaying a speed (Vs, Vp, Va) of the airflow determined by means of the probe.

9. The helicopter according to claim 8, **characterised in that** it comprises means for displaying a local incidence of the airflow determined by means of the probe.


**Patentansprüche**

1. Sonde zum aerodynamischen Messen eines Luftstroms, **dadurch gekennzeichnet, dass** sie Folgendes umfasst: eine Platte (13), die um eine Achse (12) rotiert, einen zum Emittieren einer Schallwelle fähigen Emitter (17) und einen Empfänger (18), der auf die Schallwelle anspricht, wobei der Emitter (17) und der Empfänger (18) zwei Elemente einstückig mit der Platte (13) bilden und an verschiedenen Positionen der Platte (13) positioniert sind, wobei die Sonde ferner Mittel zum Liefern von Informationen (25) umfasst, die eine Verlaufsdauer der Schallwelle zwischen den beiden Elementen (17, 18) und eine zeitliche Variation der Informationen repräsentieren, und dadurch, dass sie Mittel zum Ermitteln der lokalen Geschwindigkeit (Vs) des Luftstroms in der Nähe der Platte (13) in Abhängigkeit von der Differenz zwischen einem Höchstwert (26) und einem Mindestwert (27) der zeitlichen Variation der Informationen (25) umfasst.

2. Sonde nach Anspruch 1, **dadurch gekennzeichnet, dass** sie Mittel zum Messen einer zeitlichen Variation einer Winkelposition (θ) der Platte (13) um ihre Achse (12) und Mittel zum Ermitteln des lokalen Eintreffens des Luftstroms relativ zur Platte (13) in Abhängigkeit von Winkelpositionen (θ$_0$) der Platte (13) beim Höchstwert (26) und beim Mindestwert (27) der zeitlichen Variation der Informationen (25) umfasst.

3. Sonde nach einem der vorherigen Ansprüche, **dadurch gekennzeichnet, dass** sie mehrere zweite Elemente (17, 18) umfasst, die winkelmäßig um das erste Element (17, 18) verteilt sind.

4. Sonde nach Anspruch 3, **dadurch gekennzeichnet, dass** sich die zweiten Elemente (17, 18) im gleichen Abstand vom ersten Element (17, 18) befinden.

5. Sonde nach einem der vorherigen Ansprüche, **dadurch gekennzeichnet, dass** das erste Element ein Empfänger (18) ist, und dadurch, dass das zweite Element ein Emitter (17) ist.

6. Sonde nach einem der vorherigen Ansprüche, **dadurch gekennzeichnet, dass** sie in einem Hubschrauber (10) installiert ist, der einen Kipprotor (11) aufweist, der den Auftrieb des Hubschraubers (10) erzeugt, und dadurch, dass die rotierende Platte (13) einstückig mit dem Rotor (11) ist.

7. Sonde nach einem der vorherigen Ansprüche, **dadurch gekennzeichnet, dass** sie Folgendes umfasst: Drucksensoren (30, 31) für die Luft um den Hubschrauber (10), Mittel zum Ermitteln einer zweiten Geschwindigkeit (Vp) des Luftstroms um den Hubschrauber (10) anhand von von den Drucksensoren (30, 31) empfangenen Informationen und Mittel zum Ermitteln einer dritten Geschwindigkeit (Va) des Luftstroms auf der Basis einer Gewichtung einer ersten Geschwindigkeit (Vs) des Luftstroms, die von der Information stammt, die eine Verlaufdauer der Schallwelle und der zweiten Geschwindigkeit (Vp) repräsentiert.

8. Hubschrauber, **dadurch gekennzeichnet, dass** er eine Sonde nach einem der vorherigen Ansprüche und Mittel zum Anzeigen einer mit Hilfe der Sonde ermittelten Geschwindigkeit (Vs, Vp, Va) des Luftstroms umfasst.

9. Hubschrauber nach Anspruch 8, **dadurch gekennzeichnet, dass** er Mittel zum Anzeigen eines lokalen Eintreffens des mit der Sonde ermittelten Luftstroms umfasst.

FIG.1

EP 2 202 524 B1

FIG.2

FIG.3

FIG.4

**EP 2 202 524 B1**

**RÉFÉRENCES CITÉES DANS LA DESCRIPTION**

**Documents brevets cités dans la description**

- US 4143548 A